# EUROPÄISCHE PATENTSCHRIFT

(11) **EP 2 641 496 B1**
(45) Veröffentlichungstag und Bekanntmachung des Hinweises auf die Patenterteilung: **21.01.2015**
(21) Anmeldenummer: 12001989.8
(22) Anmeldetag: 21.03.2012
(51) Int. Cl.: A43D 3/14, F16B 21/08, F16B 21/06

(54) **Stiefelspanner**
Boot tree
Embauchoir de bottes

(43) Veröffentlichungstag der Anmeldung: 25.09.2013
(73) Patentinhaber: Norbert Schmid GmbH & Co. KG, 70736 Fellbach (DE)
(72) Erfinder: Schmid, Dietmar, 70734 Fellbach (DE); Daubenberger, Markus, 70734 Fellbach (DE)
(74) Vertreter: Riedel, Peter

(56) Entgegenhaltungen:
- CH-A- 501 384
- DE-A1- 3 609 193
- DE-U1- 20 100 580
- GB-A- 2 211 723
- JP-A- 2003 159 102

## Beschreibung

Die Erfindung betrifft einen Stiefelspanner der im Oberbegriff des Anspruchs 1 angegebenen Gattung.

Aus der DE 201 00 580 U1 ist ein Stiefelspanner bekannt, der zwei Schuhformkörper und einen dazwischen angeordneten Federmechanismus umfasst. Zur Verbindung der Schuhformkörper mit dem Federmechanismus sind Kunststoffverbinder vorgesehen, die an dem Schuhformkörper angeordnet sind. Die Kunststoffverbinder weisen einen Grundkörper mit einem daran angeformten Anlageteller und zwei am anderen Ende des Grundkörpers vorgesehene Rastzungen auf, die durch eine Öffnung im Federmechanismus greifen.

Der vorliegenden Erfindung liegt die Aufgabe zugrunde, einen Stiefelspanner der gattungsgemäßen Art so zu gestalten, dass die Schaftformer einfacher herstellbar und leichter an dem Federmechanismus montierbar sind.

Diese Aufgabe wird durch einen Stiefelspanner mit den Merkmalen des Anspruchs 1 gelöst. Durch diese Gestaltung der Befestigungseinrichtungen ist es möglich, das Werkzeug zur Herstellung der Rasthaken einfach zu gestalten, wodurch keine beweglichen Teile wie Schrägauswerfer, Schieber oder dergleichen erforderlich sind.

Es ist vorteilhaft, dass der Steg in Längsrichtung des Schaftformers verläuft. Um eine möglichst elastische Anbindung der Rasthaken an dem Steg bzw. dessen Mittelabschnitt zu schaffen, ist es zweckmäßig, dass der Steg sich über eine bestimmte Länge erstreckt. Dies wird dadurch erreicht, dass die Öffnungen mindestens einen länglichen Abschnitt aufweisen, der sich im Wesentlichen parallel zur Längsrichtung des Schaftformers erstreckt. Gemäß einer bevorzugten Ausgestaltung umfasst der Steg einen Mittelabschnitt, der bezogen auf eine Außenseite des Schaftformers in Richtung auf die Rasthaken versetzt angeordnet ist. Außerdem ist es vorteilhaft, dass die Öffnungen T-förmig gestaltet sind, wobei sich der Fuß der T-Form quer zur Längsrichtung des Schaftformers in der Richtung erstreckt, die dem Steg abgewandt ist. Durch diese Form der Öffnungen wird im Werkzeug die Ausbildung der Rasthaken stabiler.

Gemäß einer weiteren Ausgestaltung ist es vorteilhaft, dass an einem Paar Rasthaken mindestens eine Rippe angeordnet ist. Auf diese Weise wird erreicht, dass die Rasthaken nur in einer bestimmten Ausrichtung des Schaftformers an dem Federmechanismus angebracht werden können. Auf diese Weise werden Montagefehler vermieden. Eine besonders geeignete Ausgestaltung des Federmechanismus besteht darin, dass dieser aus zwei halbkreisförmigen Bogenfedern sowie zwei diese verbindenden Mittelteilen gebildet ist, wobei die Bogenfedern zusammen mit den Mittelteilen einen einteiligen, geschlossenen, ovalen Ring aus Kunststoff bilden und die Öffnungen zur Aufnahme der Rasthaken an den Mittelteilen vorgesehen sind. Durch eine solche Ausgestaltung als elastische Kunststofffeder sind auch komplexe Formgebungen in einer Großserie preisgünstig herstellbar. Durch die Form als Oval können die Federkräfte über die Längsachse des Schaftformers verteilt eingeleitet werden. Außerdem ist ein Verkanten, beispielsweise eine Kippbewegung der beiden Schaftformer gegeneinander, vermieden.

Ausführungsbeispiele der Erfindung sind nachstehend anhand der Zeichnung näher erläutert. In der Zeichnung zeigt:
- Fig. 1: einen Stiefelspanner mit einem zwischen zwei Schaftformern angeordneten Federmechanismus,
- Fig. 2: eine Ansicht auf einen Schaftformer in seiner Längserstreckung,
- Fig. 3: einen Schnitt entlang der Linie III-III in Fig. 2 in vergrößerter Darstellung,
- Fig. 4: einen Schnitt entlang der Linie IV-IV in Fig. 2 in vergrößerter Darstellung,
- Fig. 5: eine Ansicht eines ersten Einsatzes eines Spritzgusswerkzeugs in seiner Längserstreckung,
- Fig. 6: einen Schnitt durch das Spritzgusswerkzeug in der Ebene der Linie VI-VI in Fig. 5 in vergrößerter Darstellung,
- Fig. 7: einen Schnitt entlang der Linie VII-VII in Fig. 1 in vergrößerter Darstellung,
- Fig. 8: einen Ausschnitt einer perspektivischen Ansicht der Verbindung des Schaftformers mit dem Federmechanismus im Schnitt durch eine Befestigungseinrichtung.

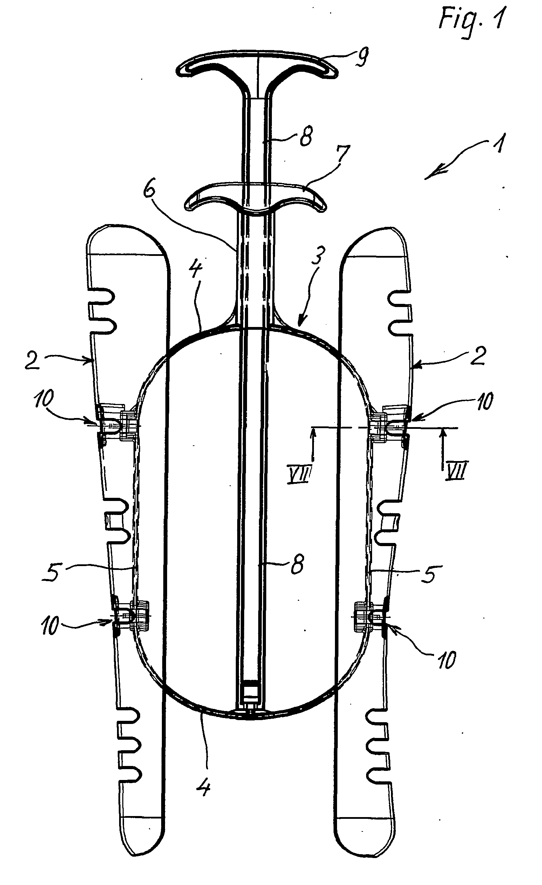

Die Fig. 1 zeigt einen Stiefelspanner 1, der zwei Schaftformer 2 und einen zwischen diesen angeordneten Federmechanismus 3 umfasst. Der Federmechanismus 3 ist aus zwei halbkreisförmigen Bogenfedern 4 aus Kunststoff sowie zwei diese verbindende Mittelteile 5 gebildet, wobei die Bogenfedern 4 zusammen mit den Mittelteilen 5 einen einteiligen, geschlossenen, ovalen Ring aus Kunststoff bilden. An den Mittelteilen 5 ist jeweils einer der Schaftformer 2 mittels Befestigungseinrichtungen 10 angebracht, die später noch näher erläutert werden.

An der in Fig. 1 oberen Bogenfeder 4 und somit am oberen Ende des Rings ist ein hohler Schaft 6 angeformt, an dessen freiem Ende sich ein erster Griff 7 befindet. Durch diesen hohlen Schaft 6 und den ersten Griff 7 ist ein Druckstab 8 geführt, dessen unteres Ende an der unteren Bogenfeder 4 befestigt ist. Am oberen Ende des Druckstabs 8 ist ein zweiter Griff 9 angeordnet. Durch Umgreifen des ersten Griffs 7 mit den Fingern einer Hand und gleichzeitigem Gegendruck mit dem Handballen derselben Hand auf den zweiten Griff 9 wird der Ring in Richtung des Druckstabs 8 gedehnt, wodurch sich die beiden Mittelteile 5 und die daran befestigten Schaftformer 2 aufeinanderzubewegen. Beim Loslassen der Griffe 7, 9 wird der Ring quer zur Längsrichtung des Druckstabs 8 wieder gespreizt und ebenso die Schaftformer 2.

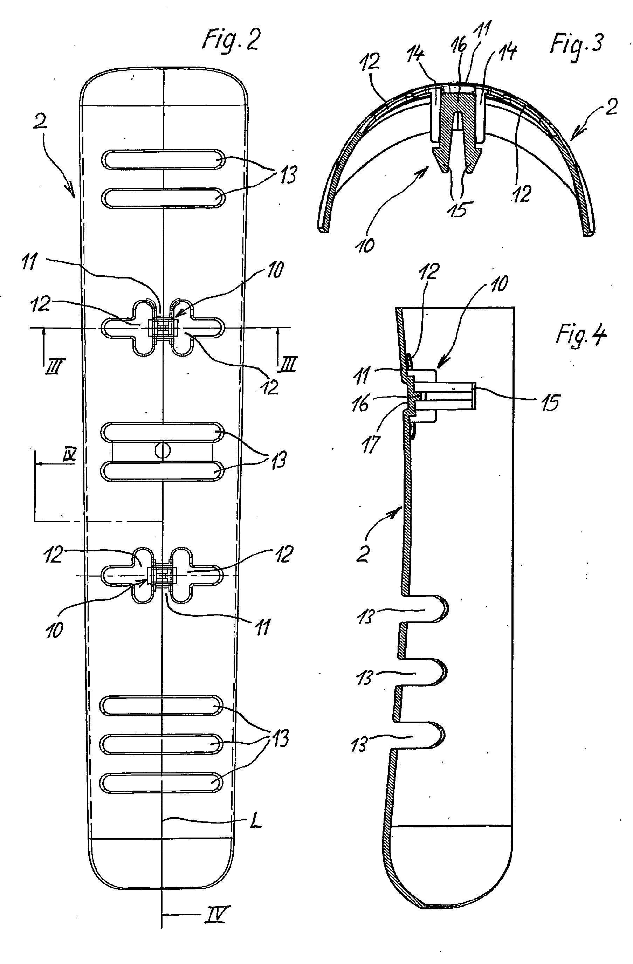

In Fig. 2 ist einer der Schaftformer 2 in seiner Längserstreckung dargestellt. Aus dieser Ansicht ist ersichtlich, dass zwei Befestigungseinrichtungen 10 gemäß Fig. 1 vorgesehen sind, die an Stegen 11 zwischen Öffnungen 12 angeordnet sind. Die Öffnungen 12 weisen in der in Fig. 2 gezeigten Ansicht im Wesentlichen eine T-Form auf. Dabei ist der Fuß der T-Form orthogonal zu einer Längsmittelachse L von dieser weg gerichtet. Die Öffnungen 12 sind spiegelbildlich zur Längsmittelachse L angeordnet. Bezogen auf die Längserstreckung des Schaftformers 2 sind zwischen den Befestigungseinrichtungen 10 sowie zwischen diesen und den Enden des Schaftformers 2 quer zur Längsachse verlaufende Langlöcher 13 vorgesehen.

Die Fig. 3 zeigt einen Schnitt entlang der Linie III-III in Fig. 2, wobei es sich um einen Querschnitt im Bereich einer Befestigungseinrichtung 10 handelt. Der Schnitt verläuft durch seitliche Abschnitte des Schaftformers 2 sowie durch die seitlich des Stegs 11 angeordneten Öffnungen 12 und zwei Rasthaken 15, die an einem gemeinsamen Basisabschnitt 16 angeformt sind. Die geometrische Gestaltung und Materialauswahl ist so getroffen, dass sich bei Montage des Schaftformers 2 an dem Federmechanismus 3 die Rasthaken 15 gegeneinander bewegen und in einer Raststellung elastisch zurückfedern und entsprechende Kanten an den Mittelteilen 5 hintergreifen. Nicht in der Schnittebene liegen seitlich der Rasthaken 15 angeordnete Rippen 14, die allerdings kürzer sind als die Rasthaken. Diese Rippen 14 sind so angeordnet, dass die Montage des Schaftformers 2 nur in einer vorgegebenen Ausrichtung an dem Federmechanismus erfolgen kann und somit Montagefehler ausgeschlossen sind. Wie aus Fig. 3 ersichtlich ist, liegt die Oberkante des Sockelabschnitts 16 unterhalb der Außenkontur des Stegs 11.

Die Fig. 4 zeigt einen Schnitt entlang der Linie IV-IV in Fig. 2. Aus dieser Darstellung geht der Querschnitt der Langlöcher 13 in diesem Teil des Schaftformers 2 hervor. Im Bereich der Befestigungseinrichtung 10 ist ein Rasthaken 15 ersichtlich mit einem bezogen auf die Außenseite des Schaftformers 2 und seitliche Abschnitte des Stegs 11 versetzt angeordneten Mittelabschnitt 17, an dem sich der Basisabschnitt 16 befindet, von dem der Rasthaken 15 ausgeht.

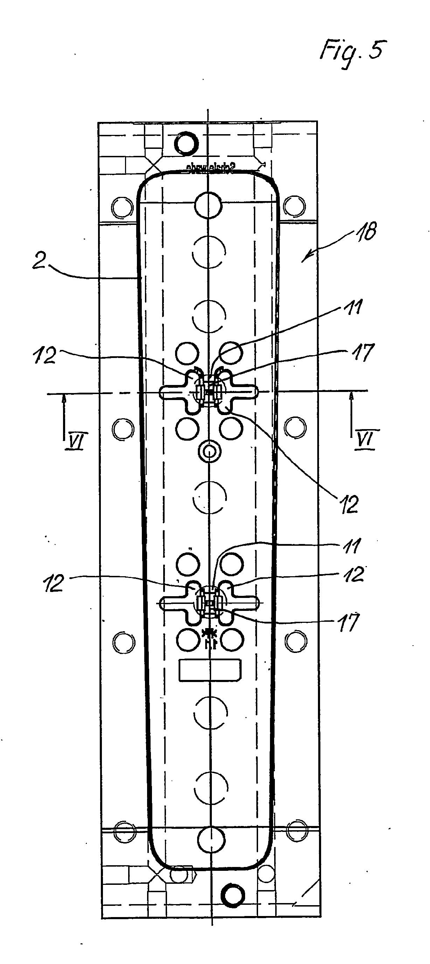

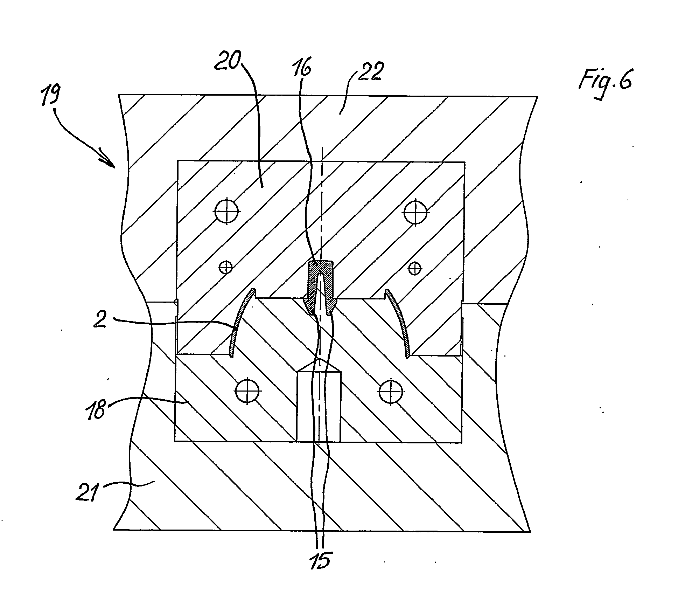

In Fig. 5 ist eine Draufsicht auf einen ersten Einsatz 18 eines Spritzgusswerkzeugs gezeigt. An diesem Einsatz 18 ist die Form des Schaftformers 2 sowie der Öffnungen 12 und dem dazwischen liegenden Steg 11 mit dem Mittelabschnitt 17 ausgebildet. Ebenso sind an diesem Einsatz 18 entsprechende Vertiefungen zur Formung der Rasthaken vorgesehen, die jedoch aus Fig. 6 besser ersichtlich sind.

Die Fig. 6 zeigt einen Schnitt durch ein Spritzgusswerkzeug 19 in der Ebene, die in Fig. 5 mit der Linie VI-VI bezeichnet ist. Der erste Einsatz 18 ist in einer unteren Formplatte 21 gehalten. In einer oberen Formplatte 22 befindet sich ein zweiter Einsatz 20 des Spritzgusswerkzeugs 19. Zwischen den Einsätzen 18, 20 ist eine Kavität gebildet, deren Form exakt dem durch Spritzguss zu erzeugenden Schaftformer 2 mit allen seinen körperlichen Merkmalen entspricht. Seitlich neben dem Schaftformer 2 und dort, wo die Öffnungen 12 vorgesehen sind, kommen der erste Einsatz 18 und der zweite Einsatz 20 zur dichten Anlage. Aufgrund der Formgebung dieser Einsätze 18, 20 sind für die Herstellung der Rasthaken 15 keine beweglichen Teile wie Schrägauswerfer, Schieber oder dgl. im ersten und/oder zweiten Einsatz 18, 20 erforderlich. Beim Entformen des Schaftformers 2 erfolgt keine Verformung der Rasthaken 15.

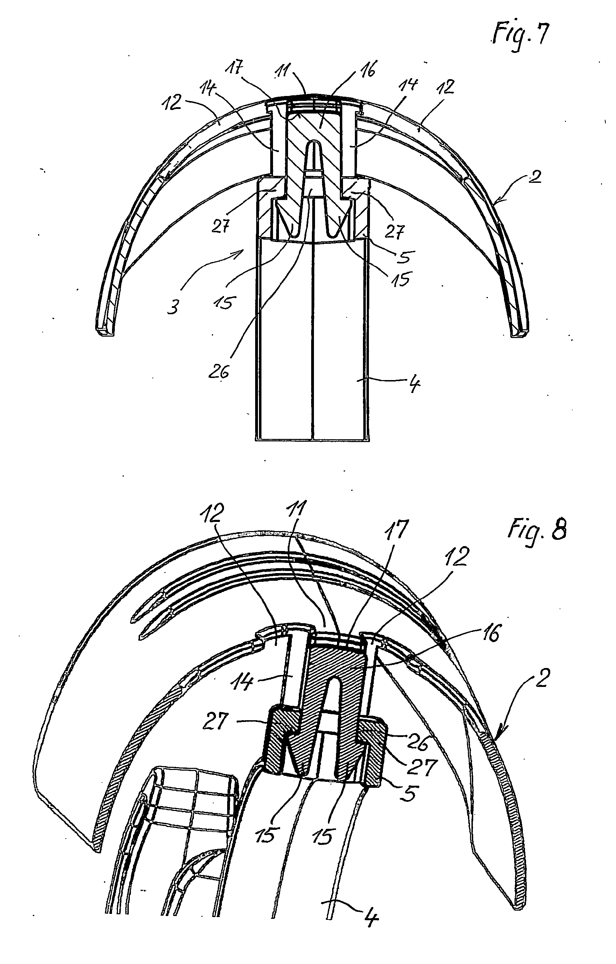

Die Fig. 7 zeigt einen Schnitt entlang der Linie VII-VII in Fig. 1 in vergrößerter Darstellung. Der Schaftformer 2 weist zwischen den Öffnungen 12 den Steg 11 mit dem etwas nach innen versetzten Mittelabschnitt 17 auf, an dem sich der Basisabschnitt 16 befindet, von dem aus sich die Rasthaken zu dem aus Bogenfeder 4 und Mittelteil 5 gebildeten Federmechanismus 3 erstrecken. In dem Mittelteil ist eine Öffnung 26 vorgesehen, die von Vorsprüngen 27 umgeben ist, so dass auf der Innenseite der Vorsprünge Kanten gebildet werden, hinter die die Rasthaken 15 greifen. Bei der Montage des Schaftformers 2 am Federmechanismus 3 werden die Rasthaken 15 in die Öffnung 26 gesteckt, wobei sie sich aufgrund der Elastizität aufeinanderzubewegen und somit durch die Öffnung 26 geschoben werden können. Wenn die Rasthaken 15 weit genug eingesteckt sind, federn diese aufgrund ihrer Elastizität in ihre ursprüngliche Lage zurück und hintergreifen somit die Kanten der Vorsprünge 27. Maßnahmen für eine erzwungene Aufweitung sind nicht notwendig.

In Fig. 8 ist eine perspektivische Darstellung der Verbindung des Schaftformers mit dem aus Bogenfedern 4 und Mittelteilen 5 bestehenden Federmechanismus gezeigt. Aus dieser Darstellung ist besonders deutlich die Ausgestaltung des Stegs 11 mit dessen Mittelabschnitt 17 zwischen den Öffnungen 12 ersichtlich. Die Bezugszeichen in Fig. 8 stimmen für gleiche Teile mit denjenigen der Fig. 7 überein. Als Material für den Stiefelspanner kommen insbesondere Polypropylen, Polystyrol und Polyformaldehyd in Betracht.

## Patentansprüche

1. Stiefelspanner (1) mit zwei aus Kunststoff gefertigten Schaftformern (2) und einem zwischen diesen angeordneten Federmechanismus (3) und an den Schaftformern (2) vorgesehenen Befestigungseinrichtungen (10) zur Verbindung der Schaftformer (2) mit dem Federmechanismus (3), wobei die Befestigungseinrichtungen (10) Rasthaken (15) umfassen, die einstückig mit den Schaftformern ausgeführt und zur Befestigung an dem Federmechanismus (3) in an diesem vorgesehene Öffnungen (26) gesteckt sind und die Rasthaken (15) Kanten von an die Öffnungen (26) begrenzenden Vorsprüngen (27) hintergreifen,
**dadurch gekennzeichnet, dass** die Befestigungseinrichtungen (10) an einem zwischen zwei im Schaftformer (2) vorgesehenen Öffnungen (12) verlaufenden Steg (11) angeordnet sind und die Rasthaken (15) an einem am Steg (11) ausgebildeten Basisabschnitt (16) angeformt sind.

2. Stiefelformer nach Anspruch 1,
**dadurch gekennzeichnet, dass** der Steg (11) einen Mittelabschnitt (17) umfasst, der bezogen auf eine Außenseite des Schaftformers (2) in Richtung auf die Rasthaken (15) versetzt angeordnet ist.

3. Stiefelspanner nach Anspruch 2,
**dadurch gekennzeichnet, dass** der Steg (11) in Längsrichtung des Schaftformers (2) verläuft.

4. Stiefelspanner nach Anspruch 3,
**dadurch gekennzeichnet, dass** die Öffnungen (12) mindestens einen länglichen Abschnitt aufweisen, der sich im Wesentlichen parallel zur Längsrichtung des Schaftformers (2) erstreckt.

5. Stiefelspanner nach Anspruch 4,
**dadurch gekennzeichnet, dass** die Öffnungen (12) spiegelbildlich zu einer Längsmittelachse (L) des Schaftformers (2) angeordnet sind.

6. Stiefelspanner nach Anspruch 5,
**dadurch gekennzeichnet, dass** die Öffnungen (12) T-förmig gestaltet sind, wobei sich der Fuß der T-Form quer zur Längsrichtung des Schaftformers (2) in der Richtung erstreckt, die dem Steg (11) abgewandt ist.

7. Stiefelspanner nach Anspruch 6,
**dadurch gekennzeichnet, dass** an einem Paar Rasthaken (15) mindestens eine Rippe (14) angeordnet ist.

8. Stiefelspanner nach Anspruch 7,
**dadurch gekennzeichnet, dass** der Federmechanismus (3) aus zwei halbkreisförmigen Bogenfedern (4) sowie zwei diese verbindenden Mittelteilen (5) gebildet ist, wobei die Bogenfedern (4) zusammen mit den Mittelteilen (5) einen einteiligen, geschlossenen, ovalen Ring aus Kunststoff bilden und die Öffnungen (26) zur Aufnahme der Rasthaken (15) an den Mittelteilen (5) vorgesehen sind.

## Claims

1. Boot tree (1), comprising two shaft formers (2) made of a plastic material, a spring mechanism (3) located between the former and mounting devices (10) provided on the shaft formers (2) for connecting the shaft formers (2) to the spring mechanism (3), wherein the mounting devices (10) comprise latching hooks (15) which are designed integral with the shaft formers and which are inserted into openings (26) provided in the spring mechanism (3) for securing the latter, and wherein the latching hooks (15) engage edges of projections (27) bounding the openings (26) from behind,
**characterised in that** the mounting devices (10) are located on a web (11) extending between two openings (12) provided in the shaft former (2), and **in that** the latching hooks (15) are integrally formed on a base section (16) formed on the web (11).

2. Boot tree according to claim 1,
**characterised in that** the web (11) comprises a central section (17) which is offset in the direction towards the latching hooks (15) relative to an outside of the shaft former (2).

3. Boot tree according to claim 2,
**characterised in that** the web (11) extends in the longitudinal direction of the shaft former (2).

4. Boot tree according to claim 3,
**characterised in that** the openings (12) have at least one oblong section which extends substantially parallel to the longitudinal direction of the shaft former (2).

5. Boot tree according to claim 4,
**characterised in that** the openings (12) are arranged as mirror images relative to the longitudinal central axis (L) of the shaft former (2).

6. Boot tree according to claim 5,
**characterised in that** the openings (12) are designed to be T-shaped, the foot of the T-shape extending at right angles to the longitudinal direction of the shaft former (2) in the direction away from the web (11).

7. Boot tree according to claim 6,
**characterised in that** at least one rib (14) is provided on a pair of latching hooks (15).

8. Boot tree according to claim 7,
**characterised in that** the spring mechanism (3) consists of two semicircular arcuate springs (4) and two central parts (5) connecting the former, wherein the arcuate springs (4) together with the central parts (5) form a single-part, closed oval ring made of a plastic material and the openings (26) are provided for the reception of the latching hooks (15) on the central parts (5).

## Revendications

1. Embauchoir de bottes (1) avec deux formes pour tiges (2) fabriquées en matière plastique, un mécanisme à ressort (3) disposé entre celles-ci et des dispositifs de fixation (10) prévus sur lesdites formes (2) et destinés à relier celles-ci au mécanisme à ressort (3), étant précisé que les dispositifs de fixation (10) comprennent des crochets de verrouillage (15) qui sont formés d'une seule pièce avec les formes pour tiges et qui, pour la fixation au mécanisme à ressort (3), sont introduits dans des ouvertures (26) prévues sur celui-ci, et que les crochets de verrouillage (15) viennent s'enclencher derrière les bords de saillies (27) délimitant les ouvertures (26),
**caractérisé en ce que** les dispositifs de fixation (10) sont disposés sur une bande (11) qui s'étend entre deux ouvertures (12) prévues dans la forme pour tige (2), et les crochets de verrouillage (15) sont rapportés sur une section de base (16) formée sur ladite bande (11).

2. Embauchoir pour bottes selon la revendication 1,
**caractérisé en ce que** la bande (11) comprend une section centrale (17) qui est décalée par rapport au côté extérieur de la forme pour tige (2), en direction des crochets de verrouillage (15).

3. Embauchoir pour bottes selon la revendication 2,
**caractérisé en ce que** la bande (11) s'étend dans le sens longitudinal de la forme pour tige (2).

4. Embauchoir pour bottes selon la revendication 3,
**caractérisé en ce que** les ouvertures (12) comportent au moins une partie oblongue qui s'étend globalement parallèlement au sens longitudinal de la forme pour tige (2).

5. Embauchoir pour bottes selon la revendication 4,
**caractérisé en ce que** les ouvertures (12) sont disposées en miroir par rapport à un axe longitudinal médian (L) de la forme pour tige (2).

6. Embauchoir pour bottes selon la revendication 5,
**caractérisé en ce que** les ouvertures (12) ont la forme d'un T, étant précisé que la base de la forme du T s'étend transversalement par rapport au sens longitudinal de la forme pour tige (2), dans le sens opposé à la bande (11).

7. Embauchoir pour bottes selon la revendication 6,
**caractérisé en ce qu'**au moins une nervure (14) est disposée sur une paire de crochets de verrouillage (15).

8. Embauchoir pour bottes selon la revendication 7,
**caractérisé en ce que** le mécanisme à ressort (3) est formé de deux ressorts courbes semi-circulaires (4) et de deux éléments centraux (5) qui relient ceux-ci, étant précisé que les ressorts courbes (4) forment avec les éléments centraux (5) un anneau ovale fermé d'une seule pièce en matière plastique, et que les ouvertures (26) destinées à recevoir les crochets de verrouillage (15) sont prévues sur les éléments centraux (5).
